# EUROPÄISCHE PATENTANMELDUNG

(11) **EP 0 865 186 A2**
(43) Veröffentlichungstag der Anmeldung: **16.09.1998**
(21) Anmeldenummer: 98104608.9
(22) Anmeldetag: 13.03.1998
(51) Int. Cl.: H04M 1/72

(54) **Telefonstation**

(30) Priorität: 13.03.1997 DE 29704606 U
(71) Anmelder: Bury, Henryk, Dipl.-Ing., 32584 Löhne (DE)
(72) Erfinder: Bury, Henryk, Dipl.-Ing., 32584 Löhne (DE)
(74) Vertreter: TER MEER STEINMEISTER & PARTNER GbR

(57) **Zusammenfassung**

Telefonstation mit einem Gehäuse (12) zur Aufnahme eines Telefonhörers (14) und einer Telefontastatur (16), dadurch gekennzeichnet, daß das Gehäuse (12) der Telefonstation (10) eine Aufnahme (30) mit einer Ladeeinrichtung für ein Handy (32) aufweist, und daß das Handy (32) im aufgenommenen Zustand mit der Telefonstation (10) derart gekoppelt ist, daß die über das Handy (32) erfolgenden Anrufe mit der Telefonstation (10) entgegennehmbar sind.

## Beschreibung

Die Erfindung betrifft eine Telefonstation mit einem Gehäuse zur Aufnahme eines Telefonhörers und einer Telefontastatur.

Herkömmliche Telefone, bei denen der Telefonhörer mit dem Basisteil verbunden ist, das über eine Telefonleitung an das Telefonnetz angeschlossen ist, sind seit langem bekannt. Andererseits gibt es sogenannte schnurlose Telefone, bei denen der Telefonhörer von der über eine Telefonleitung mit dem Telefonnetz verbundenen Basisstation getrennt ist. Der Benutzer kann sich auf diese Weise während eines Telefongesprächs innerhalb eines bestimmtein Aktionsradius frei belegen. Seit längerer Zeit werden im zunehmenden Maße auch netzungebundene Telefone, sogenannte Handys, verwendet, die schnurlos die Verbindung zu einem Gesprächspartner herstellen, so daß ein Benutzer unabhängig vom Aufenthaltsort telefonieren kann. Telefonbenutzer, die ständig erreichbar sein möchten, nutzen im allgemeinen zwei Telefone. Zu Hause wird beispielsweise ein netzgebundnes Telefon mit einer eigenen Rufnummer verwendet, und unterwegs wird das Handy mit einer zweiten Rufnummer benutzt. Ist der Benutzer zu Hause, dann kann er dort sowohl unter der Rufnummer des Handys als auch unter der Rufnummer des anderen Telefons erreicht werden. Das Vorhandensein zweier Telefone führt dazu, daß der Benutzer oft erst überlegen muß, welches Telefon gerade klingelt, bevor er anschließend das entsprechende Telefon benutzt.

Aufgabe der Erfindung ist es, eine Telefonstation zu schaffen, die die Handhabung zweier Telefone erleichtert.

Diese Aufgabe wird erindungsgemäß dadurch gelöst, daß das Gehäuse der Telefonstation eine Aufnahme mit einer Ladeeinrichtung für ein Handy aufweist, und daß das Handy im aufgenommenen Zustand derart mit der Telefonstation gekoppelt ist, daß die über das Handy erfolgenden Anrufe mit der Telefonstation entgegennehmbar sind.

Die erfindungsgemäße Telefonstation weist eine Aufnahme mit Ladeinrichtung für ein Handy auf, so daß eine separate Ladestation für das Handy überflüssig ist, Auf diese Weise befindet sich das Handy, das, wenn es nicht benutzt wird, üblicherweise an die Ladeeinrichtung angeschlossen ist, am selben Ort wie die Telefonstation. Das von der Aufnahme aufgenommene Handy und die Telefonstation sind dabei derart miteinander gekoppelt, daß ein Anruf, der über das Handy erfolgt, mit der Telefonstation angenommen werden kann. Ein Benutzer kann bespielsweise zu Hause in gewohnter Weise zur Annahme des Gesprächs die Telefonstation verwenden, unabhängig davon, ob ein Anrufer die Rufnummer des Handys oder die der Telefonstation gewählt hat.

Die Kopplung zwischen dem Handy und der Telefonstation erfolgt vorzugsweise über einen mehrpoligen Verbindungsstecker, der vielfach am Handy vorgesehen ist. Verschiedene Telefonhersteller haben ihre Handys aus Servicezwecken, beispielsweise, uni bei einer Funktionsstörung des Handys schnell eine Fehleranalyse durchführen zu können, mit diesem Verbindungsstecker versehen, so daß von außen ein Zugriff auf die innere Beschaltung des Handys besteht. Befindet sich das Handy in der Aufnahme der Telefonstation, dann ist die innere Beschaltung des Handys mit der der Telefonstation gekoppelt, so daß ein über das Handy erfolgender Anruf von der Telefonstation entgegengenommen werden kann.

Wenn das Handy zum Telefonieren benutzt werden soll, läßt es sich einfach und mühelos aus der Telefonstation herausnehmen.

Modernere Telefonstationen sind oft mit einer Freisprecheinrichtung ausgestattet, die das Führen eines Telefongesprächs bei aufgelegtem Telefonhörer ermöglicht. Das Handy ist zweckmäßigerweise so mit der Telefonstation gekoppelt, daß die Freisprecheinrichtung auch dann verwendet werden kann, wenn ein Anrufer die Telefonnummer des Handys gewählt hat.

Vorzugsweise ist das Handy auch mit einem Anrufbeantworter gekoppelt, der vielfach bei Telefonstationen vorgesehen ist. Auf diese Weise kann ein Anrufer, der die Telefonnummer des Handys gewählt hat, eine Nachricht auf dem Anrufbeantworter der Telefonstation hinterlassen.

Die Tasten der Telefonstation können vorzugsweise zum Wählen einer Telefonnummer verwendet werden, obwohl die Verbindung zu einem Gesprächspartner nicht über die Telefonstation, sondern über das Handy hergestellt werden soll. Diese Möglichkeit ist dann von Vorteil, wenn die Telefonstation selbst nur einen Telefonhörer hat, der durch eine Leitung mit der Telefonstation verbunden ist. Die Telefonstation läßt sich zusammen mit dem Handy dann wie ein schnurloses Telefon verwenden.

Die Telefonstation kann ein netzgebundenes Telefon sein, das aufgrund des Anschlusses an das Telefonnetz nur ortsgebunden verwendet werden kann.

Andererseits ist es auch möglich, daß die Telefonstation selbst ein netzungebundenes Telefon wie das Handy ist, so daß die Einheit aus Telefonstation und Handy bei entsprechender Stromversorgung überall einsatzbereit ist.

Im übrigen kann die Telefonstation auch eine weitere Aufnahme für einen zweiten, schnurlosen Telefonhörer der Telefonstation aufweisen. Der Benutzer kann, wenn er sich beispielsweise im Garten befindet, diesen schnurlosen Telefonhörer mitnehmen. Unabhängig davon, welche Rufnummer ein Anrufer gewählt hat, kann der Benutzer das Gespräch mit dem schnurlosen Telefonhörer annehmen.

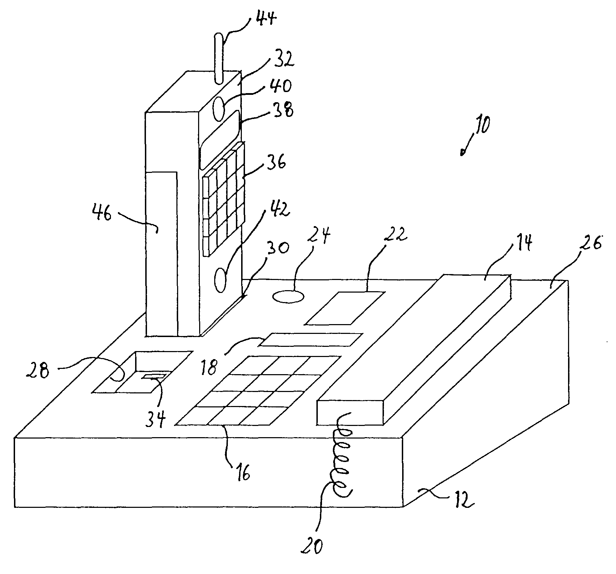

Im folgenden werden bevorzugte Ausführungsbeispiele der Erfindung anhand der Zeichnung näher erläutert.

Die einzige Figur ist eine schematische Darstellung einer erfindungsgemäßen Telefonstation.

Die einzige Figur zeigt eine mit 10 bezeichnete Telefonstation mit einem Gehäuse 12, einem Telefonhörer 14, einem Tastaturfeld 16 und einer Anzeige 18 zur Darstellung der über das Tastaturfeld eingegebenen Telefonnummern. Der Telefonhörer 14 ist bei der gezeigten Ausführungsform durch eine Leitung 20 mit der Telefonstation 10 verbunden. Eine schnurlose Verbindung zwischen dem Telefonhörer 14 und der Telefonstation 10 ist in diesem Zusammenhang ebenfalls möglich. Die Telefonstation 10, die eine eigene Rufnummer hat, ist durch eine nicht gezeigte Telefonleitung an das Telefonnetz angeschlossen.

Die Telefonstation 10 weist im Inneren des Gehäuses 12 eine Freisprecheinrichtung auf, so daß das Führen eines Telefongesprächs mit aufgelegten, Telefonhörer 14 möglich ist. Zur Wiedergabe des vom Gesprächspartner Gesprochenen sind in bekannter Weise ein Lautsprecher 22 und zur Erfassung des vom Benutzer Gesprochenen ein Mikrofon 24 vorgesehen.

Das Gehäuse 12 der Telefonstation weist gemäß der Figur im linken Bereich der Oberseite 26 zwei Aufnahmen 28,30 in der Form von quaderförmigen Vertiefungen auf. Die hintere Aufnahme 30 ist für ein Handy 32 vorgesehen, während die vordere Aufnahme 28 für ein zusätzliches, nicht gezeigtes Betriebsakku des Handys 32 verwendet wird, das durch eine nur angedeutete Ladeeinrichtung betriebsbereit gehalten wird, von der in der Figur ein auf dein Grund der Vertiefung der Aufnahme 28 angeordneter Kontakt 34 zu sehen ist.

Das Handy 32, das ebenfalls eine eigene Rufnummer hat, weist, wie ein herkömmliches Telefon auch, ein Tastaturfeld 36, eine Anzeige 38, einen Lautsprecher 40 und ein Mikrofon 42 auf. Eine Antenne 44 sorgt für die schnurlose Verbindung. Das Handy ist betriebsbereit in der hinteren Aufnahme 30 aufgenommen. d. h., das Handy ist mit einem Betriebsakku 46 bestückt, das durch die ebenfalls in der Aufnahme 30 vorgesehene Ladeeinrichtung ständig betriebsbereit gehalten wird. Die Ladeeinrichtung wird im übrigen durch eine nicht gezeigte Stromquelle versorgt.

Das Handy weist auf der in der Figur nicht sichbaren Unterseite einen mehrpoligen Verbindungsstecker auf, der bei Handys zu Servicezwecken, wie etwa im Reparaturfall, vom Hersteller relativ häufig vorgesehen ist. Der Verbindungsstecker steht, wenn sich das Handy 32 in der Aufnahme 30 der Telefonstation befindet, in Kontakt mit einer nicht dargestellten Verbindungsbuchse der Telefonstation 10. Das Handy 32 und die Telefonstation 10 sind derart miteinander gekoppelt, das ein Anruf, der über das Handy erfolgt, von der Telefonstation 10 angenommen und von der Telefonstation aus geführt werden kann. Auf diese Weise kann, wie es beispielsweise zu Hause allgemein der Fall ist, jeder Anruf, der entweder von, Handy 32 oder von der Telefonstation 10 erfolgt, von der Telefonstation entgegengenommen werden. Der Benutzer muß nicht mehr das Telefon benutzen, von dem der Anruf kommt, sondern benutzt nur die Telefonstation. Gerade, wenn die beiden Telefone ähnliche Klingelgeräusche haben, ist dies von Vorteil.

Das Handy und die Telefonstation 10 sind ferner so miteinander gekoppelt, daß die Freisprecheinrichtung der Telefonstation weiterhin so genutzt werden kann, wie es der Benutzer gewohnt ist, unabhängig davon, über welches Telefon angerufen wird

Die Verwendung eines in die Telefonstation integrierten Anrufbeantworters ist ebenso möglich. Wenn ein Anrufer die Telefonnummer des Handys gewählt hat und der Anruf nicht angenommen wird, kann der Anrufer eine Nachricht auf dem Anrufbeantworter der Telefonstation hinterlassen.

Zudem kann zum Wählen einer Telefonnummer die Tastatur der Telefonstation verwendet werden, auch wenn die Verbindung zu einem Gesprächspartner über das Handy hergestellt werden soll. In Verbindung mit der in der Figur gezeigten Ausführungsform, bei der der Telefonhörer durch die Leitung 20 mit der Telefonstation 10 verbunden ist, kann die Telefonstation wie eine Telefonstation mit einem schnurlosen Telefonhörer verwendet werden.

## Patentansprüche

1. Telefonstation mit einem Gehäuse (12) zur Aufnahme eines Telefonhörers (14) und einer Telefontastatur (16), dadurch **gekennzeichnet**, daß das Gehäuse (12) der Telefonstation (10) eine Aufnahme (30) mit einer Ladeeinrichtung für ein Handy (32) aufweist, und daß das Handy (32) im aufgenommenen Zustand mit der Telefonstation (10) derart gekoppelt ist, daß die über das Handy (32) erfolgenden Anrufe mit der Telefonstation (10) entgegennehmbar sind.

2. Telefonstation gemäß Anspruch 1, dadurch **gekennzeichnet**, daß das Handy (32) mit der Telefonstation (10) über einen Verbindungsstecker des Handys (32) und ein in der Aufnahme (30) der Telefonstation (10) angeordnetes Gegenstück gekoppelt ist.

3. Telefonstation gemäß Anspruch 1 oder 2, dadurch **gekennzeichnet**, daß eine Freisprecheinrichtung der Telefonstation (10) bei über das Handy (32) erfolgenden Anrufen mit den, Handy (32) gekoppelt ist.

4. Telefonstation gemäß einem der Ansprüche 1 bis 3, dadurch **gekennzeichnet**, daß das Handy (32) bei Nichtannahme eines Anrufs zur Aufzeichnung einer Nachricht mit einem Anrufbeantworter der Telefonstation (10) gekoppelt ist.

5. Telefonstation gemäß einem der vorherigen Ansprüche, dadurch **gekennzeichnet**, daß das Tastaturfeld (16) der Telefonstation (10) zur Eingabe einer durch das Handy (32) wählbaren Telefonnummer verwendbar ist.

6. Telefonstation gemäß einem der vorherigen Ansprüche, dadurch **gekennzeichnet**, daß das Gehäuse (12) der Telefonstation (10) eine zweite Aufnahme (28) mit einer Ladeeinrichtung für ein zweites Betriebsakku des Handys (32) aufweist.
